# EUROPÄISCHE PATENTANMELDUNG

(11) **EP 2 526 760 A2**
(43) Veröffentlichungstag der Anmeldung: **28.11.2012**
(21) Anmeldenummer: 12003830.2
(22) Anmeldetag: 15.05.2012
(51) Int. Cl.: A01G 23/00

(54) **Verfahren, bei dem Stämme entastet und in Stammstücke geschnitten werden und Messeinrichtung zur dreidimensionalen Vermessung**

(30) Priorität: 25.05.2011 DE 102011103126; 31.05.2011 DE 102011103726
(71) Anmelder: Ahaus, Peter Maria, 52372 Kreuznach (DE)
(72) Erfinder: Ahaus, Peter Maria, 52372 Kreuznach (DE)
(74) Vertreter: Castell, Klaus

(57) **Zusammenfassung**

Bei dem Verfahren werden Stämme entastet und in Stammstücke geschnitten, die Stammstücke nach Stammdurchmesser sortiert und danach zum Sägewerk transportiert. Dabei wird die Krümmung der Stämme oder Stammstücke vor dem Sortieren gemessen.

Dazu dient eine Messeinrichtung zur dreidimensionalen Vermessung von Stämmen oder Stammstücken, die mobil einsetzbar ist.

## Beschreibung

Die Erfindung betrifft ein Verfahren, bei dem Stämme entastet und in Stammstücke geschnitten werden, die Stammstücke nach Stammdurchmesser sortiert und danach zum Sägewerk transportiert werden. Außerdem betrifft die Erfindung eine Messeinrichtung zur dreidimensionalen Vermessung von Stämmen oder Stammstücken.

Es ist üblich, beispielsweise mit einem Vollernter im Wald die Bäume zu fällen, zu entasten und in Stammstücke zu schneiden. Dabei wird der Durchmesser der Stammstücke ermittelt und je nach Durchmesser werden die Stammstücke sortiert. Je nach Qualität werden die Stammstücke anschließend ins Sägewerk oder zur Zellstoffherstellung gebracht.

Diese seit Jahrhunderten so durchgeführte Arbeitsweise hat sich gut bewährt. Hierbei wird hingenommen, dass manchmal Stammstücke zum Sägewerk transportiert werden, die sich im Sägewerk als nicht bearbeitbar zeigen. Außerdem ist anzunehmen, dass Stammstücke der Zellstoffherstellung zugeführt werden, die möglicherweise hätten in einem Sägewerk bearbeitet werden können.

Der Erfindung liegt daher die Aufgabe zu Grunde, dieses seit langer Zeit eingeführte Verfahren zu verbessern.

Dies wird mit einem gattungsgemäßen Verfahren erreicht, bei dem die Krümmung der Stämme oder Stammstücke vor dem Sortieren gemessen wird.

Vorteilhafte Weiterbildungen der Erfindung sind Gegenstände der Unteransprüche.

Die genaue Vermessung der Stämme oder Stammstücke vor dem Transport zum Sägewerk ermöglicht es, sehr frühzeitig eine genauere Auswahl und eine bessere Sortierung durchzuführen.

Hierzu wird eine Messeinrichtung zur dreidimensionalen Vermessung von Stämmen oder Stammstücken vorgeschlagen, die mobil einsetzbar ist. Vorzugsweise ist diese Messeinrichtung sogar kalibriert. Sie kann als separate Einheit im Wald aufgestellt werden, sie ist mobil oder sie ist bereits an einem Vollernter angeordnet.

Dies ermöglicht es, die Stämme von Bäumen bereits im ungeschlagenen Zustand mittels Laser- oder Kameratechnik zu vermessen. Die Stämme könnten beispielsweise bereits mit dem Vollernter vermessen werden. Sie können jedoch auch durch eine separate Einheit am Vollernter oder am Rückezug vermessen und sortiert werden. Anstelle mit Hilfe des Vollernters könnte das Ablängen durch eine mobile Vermessungs- und Sortieranlage vorgenommen werden. Die Aufteilung des Baumes wird dabei idealerweise durch eine Vermessungsanlage übernommen. Der Stamm wird hierzu zunächst komplett entastet und vorzugsweise in voller Länge auf die mobile Vermessungsanlage abgelegt. Nach dem Vermessen des Stammes kann der Stamm optimal aufgeteilt werden. Krumme Teile werden herausgesägt. Je nach Form des Stammes kann die Länge der gesägten Stamnabschnitte gewählt werden und die einzelnen Stammabschnitte können je nach Form unterschiedlichen Verwendungsarten zugeführt werden, das heißt auf verschiedene Stapel sortiert werden. Hierdurch wird der Verschnitt minimiert und es kann erreicht werden, dass jeder Stammabschnitt der bestmöglichen Verwendung zugeführt wird.

Bei der Messung können zusätzlich oder alternativ zur Krümmung neben den geometrischen Abmessungen wie Durchmesser und Länge auch das Gewicht, die Dichte, die Feuchte, die Farbe und/oder die Dicke der Rinde gemessen werden. Der Standort der Vermessung kann per GPS ermittelt werden und neben Datum, Kundenkürzel und laufender Nummer auf jedem Stamm aufgebracht werden.

Der Erfindung liegt die Erkenntnis zu Grunde, dass die in Sägewerken für die angelieferten Stammstücke verwendete Messeinrichtung und vorzugsweise auch die Datenverarbeitungseinrichtung vom Sägewerk in den Wald verlegt wird, um durch eine besonders frühzeitige Vermessung eine optimale Sortierung zu erzielen. Diese einfache Verlagerung des Messvorgangs erhöht die Qualität des Ergebnisses beträchtlich, da nun auch Stammstücke vermessen werden, die bisher im Wald bereits aussortiert wurden und nicht zum Sägewerk transportiert wurden.

Diese einfache Veränderung des Verfahrensablaufes führt somit zu einem extremen betriebswirtschaftlichen Erfolg.

## Patentansprüche

1. Verfahren, bei dem Stämme entastet und in Stammstücke geschnitten werden, die Stammstücke nach Stammdurchmesser sortiert und danach zum Sägewerk transportiert werden, ***dadurch gekennzeichnet, dass*** die Krümmung der Stämme oder Stammstücke vor dem Sortieren gemessen wird.

2. Verfahren nach Anspruch 1, ***dadurch gekennzeichnet, dass*** die Verjüngung der Stämme oder Stammstücke vor dem Sortieren gemessen wird.

3. Verfahren nach einem der vorhergehenden Ansprüche, ***dadurch gekennzeichnet, dass*** die dreidimensionale Form der Stämme oder Stammstücke vor dem Sortieren gemessen wird.

4. Verfahren nach einem der vorhergehenden Ansprüche, ***dadurch gekennzeichnet, dass*** die Stämme nach dem Messen und vor dem Transport zum Sägewerk in Stammstücke geschnitten werden.

5. Verfahren nach einem der vorhergehenden Ansprüche, ***dadurch gekennzeichnet, dass*** die Stämme oder Stammstücke vor dem Transport zum Sägewerk mit einer elektronisch auslesbaren Markierung versehen werden.

6. Verfahren nach einem der vorhergehenden Ansprüche, ***dadurch gekennzeichnet, dass*** die Stämme vor dem Schneiden in Stammstücke gemessen werden.

7. Verfahren nach einem der vorhergehenden Ansprüche, ***dadurch gekennzeichnet, dass*** die Stämme vor dem Fällen vermessen werden.

8. Verfahren nach einem der vorhergehenden Ansprüche, ***dadurch gekennzeichnet, dass*** die Stämme oder Stammstücke mittels Lasertechnik oder Bildverarbeitung geometrisch vermessen werden.

9. Verfahren nach einem der vorhergehenden Ansprüche, ***dadurch gekennzeichnet, dass*** die Krümmung, die Abholzigkeit, die Ovalität, die Länge und/oder der Durchmesser der Stämme und/oder der Stammstücke vermessen und/oder dargestellt wird, um vorzugsweise in geeichter, zugelassener und anerkannter Form zur weiteren Verarbeitung und Abrechnung verwendet zu werden.

10. Messeinrichtung zur dreidimensionalen Vermessung von Stämmen oder Stammstücken, ***dadurch gekennzeichnet, dass*** sie mobil einsetzbar ist.

11. Messeinrichtung nach Anspruch 10, ***dadurch gekennzeichnet, dass*** sie kalibriert ist.

12. Messeinrichtung nach Anspruch 10 oder 11, ***dadurch gekennzeichnet, dass*** sie an einem Vollernter angeordnet ist.
